# EUROPEAN PATENT APPLICATION

(11) **EP 2 284 819 A2**
(43) Date of publication of application: **16.02.2011**
(21) Application number: 10171403.8
(22) Date of filing: 30.07.2010
(51) Int. Cl.: G09B 5/00, G09B 7/00

(54) **Specific user field entry**

(30) Priority: 04.08.2009 GB 0913601
(71) Applicant: Promethean Limited, Blackburn Lancashire BB1 5TH (GB)
(72) Inventor: Robinson, Mark, Blackburn, Lancashire BB1 5TH (GB)
(74) Representative: Williams, David John

(57) **Abstract**

There is disclosed a method for controlling a user input in a computer system including a display, the computer system being adapted to receive inputs from a plurality of user input devices under the control of a system input device, the method comprising: a. detecting selection, by the system input device, of a modifiable displayed item; b. receiving modification data from at least one of the plurality of user input devices; and c. modifying the modifiable displayed item with the received modification data.

## Description

### BACKGROUND TO THE INVENTION:

### Field of the Invention:

The present invention relates to an improved user interface, and particularly to a user interface adapted to receive inputs from a plurality of user input devices. The invention is particularly, but not exclusively concerned with an improvement to a user interface in an interactive display system comprising an interactive display surface.

### Description of the Related Art:

Interactive display systems are well-known. In an interactive display system, a user (or users) interact with an interactive display surface on which an image is projected. In one known environment, the interactive display surface may be a display surface of an electronic whiteboard, which is used in a classroom environment for educational purposes.

In such systems, the user (or users) stand at or close to the display surface, and interact with the display surface. Different types of interactive display surface are possible, and the user may interact with the surface by using a finger in a touch-sensitive system, or by using a pointer device such as in an electromagnetic interactive display surface. Other technologies, such as camera-based position detection, may also be used.

In such systems, the use of the pointer (or finger) at the interactive display surface may be for the same purpose as a mouse in a desktop computer system. The user uses the pointer to control a cursor displayed on the display screen, and to select icons and tools displayed on the display screen. In this way the user can manipulate the information displayed in the same manner as they may manipulate information using a desktop computer, but the manipulation takes place at the display on which information is displayed to a classroom. In this way the display is an electronic whiteboard.

It is also known in the art to provide such interactive display systems with a plurality of additional input devices. In a typical educational environment, where the display is visible to a plurality of students, the students may be equipped with individual input devices. The input devices allow the individual students to collaborate in exercises conducted using the interactive display, by providing inputs by an alternate means. In known interactive display systems such input devices provided to the students interact wirelessly with the main interactive display system. The input devices may be used, for example, for students to provide answers to multiple choice questions displayed on the whiteboard screen. Interactive display systems with the provision of such multiple input devices are typically known as learner response systems.

It is generally an aim in the use of interactive whiteboard systems, particularly in educational environments, to maximise the interaction of students with an exercise being run in conjunction with the interactive display system. The use of the input devices provided to students assist in this.

It is an object of the invention to provide improved interaction with the interactive display system in conjunction with user inputs other than at the interactive surface itself, particularly for students with an exercise being carried out using the interactive display system. In particular it is an object of the invention to increase the functionality controlled by the user input devices, preferably in order to allow further interaction with an exercise being run in conjunction with the interactive display system.

### SUMMARY OF THE INVENTION:

According to the invention there is provided a method for controlling a user input in a computer system including a display, the computer system being adapted to receive inputs from a plurality of user input devices under the control of a system input device, the method comprising: a. detecting election, by the system input device, of a modifiable displayed item; b. receiving modification data from at least one of the plurality of user input devices; and c. modifying the modifiable displayed item with the received modification data.

The method may further comprise the initial step of determining if a displayed item is modifiable.

The method may further comprise the step of selecting the modification data from a plurality of items, each item being associated with modification data. The method may further comprise displaying a list of said items, the list being displayed to a user of the system input device.

The plurality of items may comprise a plurality of identifiers associated with the plurality of user input devices. The method may further comprise the steps of determining if the selected item is to be modified by an input device; and in dependence on said modification determination, determining at least one amongst the plurality of input devices to provide the modification.

The plurality of items may comprise a plurality of modification data. The step of receiving modification data may comprise: transmitting a request for modification data to one or more user input devices; receiving modification data from one or more user input devices; and displaying the received modification data, wherein the step of modifying the modifiable displayed item comprises selecting one or more displayed modification data, and applying the selected modification data.

The method may further comprise the initial step of determining if a displayed item is proximate a current user input position, and further determining if modification of the displayed item is possible, and in dependence thereon displaying an icon proximate the displayed item in dependence on said modification determination. The user position may be determined based on a current displayed position of a system input device controlled cursor. The step of determining if a displayed item is proximate a current user input position may comprise determining if a current user input position is coincident with the displayed icon. The icon may provide an indication on a user interface that the displayed item may be modified.

In dependence on determining that a displayed item is proximate a current user input position, the displayed item may be highlighted.

The method may further comprise the step, in dependence on said modification determination, of determining if modification of the selected item is to be controlled by a plurality of input devices, and in dependence on said control determination, determining the ones amongst the plurality of input devices to provide the control.

The method may further comprise the step of displaying a list of the plurality of input devices. The list may be displayed proximate the selected item. The list may be displayed by selecting the icon.

Each of the plurality of input devices may be selected to control a different characteristic of the selected displayed item.

The step of determining the one amongst the plurality of input devices to provide the control may include displaying a list of the input devices, and selecting an input device from that list.

The method may further comprise the step, after the step of determining the one amongst the plurality of input devices to provide the control, of enabling the one of the plurality of input devices to provide the control.

The step of enabling may include sending a request for information to the one input device. The step of enabling may include sending an instruction to load a user template to the one input device. The instruction may identify a template be displayed to the display of the one input device. The template may be determined by a characteristic of the selected displayed item.

The method may comprise the step, in dependence on said modification determination, of determining if more than one modification data is to be applied to the selected item, and in dependence on said control determination, determining the ones amongst the plurality of modification data to be applied.

The method may further comprise the step of transmitting a request for modification data to a plurality of user input devices.

After modification of the displayed item, control of the displayed item may be released.

A computer program may perform, when run on a computer, any method as defined. A computer program product may store computer program code which, when run on a computer, may perform any defined method.

In another aspect the invention provides a computer for controlling a display, the computer being adapted to receive inputs from a plurality of user input devices under the control of a system input device, the computer being further adapted to: a. detect selection, by the system input device, of a modifiable displayed item; b. receive modification data from at least one of the plurality of user input devices; and c. modify the modifiable displayed item with the received modification data.

The computer may be further adapted to determine if a displayed item is modifiable.

The computer may be further adapted to select one of a plurality of items responsive to a selection by the system input device, the plurality of items each being associated with modification data. The computer may be further adapted to display a list of said items, to a user of the system input device.

The plurality of items may comprise a plurality of identifiers associated with the plurality of user input devices. The computer may be further adapted to determine at least one amongst the plurality of input devices to provide the modification in dependence on one or more selections by the system input device.

The plurality of items may comprise a plurality of modification data. The computer may be further adapted to transmit a request for modification data to one or more user input devices; receive modification data from one or more user input devices; display the received modification data, select one or more displayed modification data, and apply the selected modification data.

The computer may be further adapted to determine if a displayed item is proximate a current user input position; determine if modification of the displayed item is possible, and in dependence thereon display an icon proximate the displayed item in dependence on said modification determination.

The computer may be further adapted to determine if modification of the selected item is to be controlled by a plurality of input devices, and determine the ones amongst the plurality of input devices to provide the control.

The computer may be further adapted to display a list of the plurality of input devices. The computer may be further adapted to send a request for information to a selected user input device. The computer may be further adapted to determine if more than one modification data is to be applied to the selected item, and determine the ones amongst the plurality of modification data to be applied. The computer may be further adapted to transmit a request for modification data to a plurality of user input devices.

An interactive display system may include an interactive whiteboard and a computer as defined herein.

### BRIEF DESCRIPTION OF THE FIGURES:

The invention will now be described by way of example with reference to the accompanying figures, in which:
Figure 1 illustrates a typical environment for an interactive display system, including an interactive display and a plurality of user input devices;
Figure 2 illustrates a typical interactive display system including an electronic whiteboard incorporating an interactive display surface;
Figure 3 illustrates a further example of a typical interactive display system, comprising a conventional computer system;
Figures 4a to 4e illustrate example manipulation or modification of a displayed user input field on a computer display in accordance with a first embodiment of the invention;
Figure 5 illustrates an example process flow associated with manipulation or modification of a displayed user input field in the first embodiment of the invention;
Figure 6 illustrates an example process flow in a user input device associated with a user in various embodiments of the invention;
Figure 7 illustrates example functional blocks for implementing the process flow of Figure 6 in a user input device;
Figure 8a to 8e illustrate example manipulation or modification of a displayed user input field on a computer display in accordance with a second embodiment of the invention;
Figure 9 illustrates an example process flow for manipulating or modifying the display of a displayed user input field in accordance with the second embodiment of the invention;
Figures 10a to 10e illustrate an example manipulation or modification of a displayed user input field on a computer display in accordance with a third embodiment of the invention;
Figure 11 illustrates an example process flow for manipulating or modifying the display of a displayed user input field on a computer display in accordance with the third embodiment of the invention; and
Figure 12 illustrates the main functional elements of a computer system for implementing preferred embodiments of the invention.

### DESCRIPTION OF THE PREFERRED EMBODIMENTS:

The invention is described herein by way of reference to specific preferred embodiments and implementations. One skilled in the art will appreciate that the invention is not limited to the specifics of any arrangement described herein. In particular the invention is described herein particularly in the context of an exemplary interactive display system, and one skilled in the art will appreciate that the invention is not limited to the specifics of the described interactive display system, or indeed to an interactive display system with an interactive display surface. The invention is generally advantageously applicable to any arrangement in which an input field of a computer display may be modified, in an environment where a plurality of user input devices are in communication with the display.

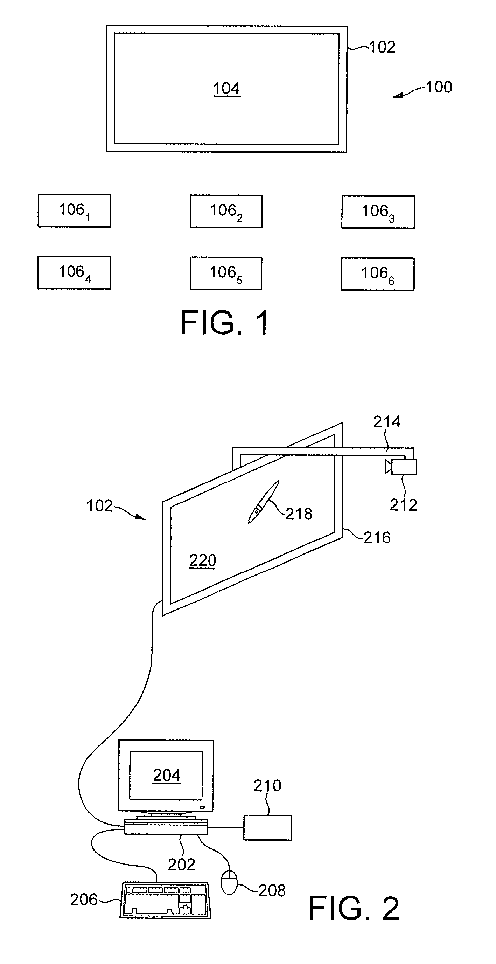

With reference to Figure 1 there is generally illustrated a display environment 100 within which the invention and embodiments thereof may be implemented. The display environment 100 includes a display 102 having a display screen or surface 104. Associated with the display 102 is a plurality of input devices 106. In the example of Figure 1 there is illustrated six input device 106, denoted by reference numerals 106₁ to 106₆. The input devices 106₁ to 106₆ are adapted to communicate with the display device 102, such that there is an interaction between information displayed on the display screen 104 and the input devices. The communication between the input devices 106₁ to 106₆ and the display device 102 may be by way of a plurality of means, such as by virtue of interconnection with a computer system associated with the display 102, with wireless interconnection taking place between the input devices 106₁ to 106₆ and the display 102 via the computer system.

In a preferred implementation the display 102 is part of an interactive display system, an exemplary implementation of which is illustrated in Figure 2. In Figure 2 the display comprises an interactive whiteboard generally denoted by reference numeral 216. The interactive whiteboard 216 is associated with a boom arm 214 which extends perpendicularly away from the whiteboard to provide a support for a projector 212. As known in the art the projector 212 projects images onto the interactive whiteboard 216. The interactive whiteboard 216 is connected to a computer 202, having a display screen 204, a keyboard input device 206, and a mouse input device 208. Also shown in Figure 2 is a wireless device 210 associated with the computer 202. In a preferred embodiment the wireless device 210 provides for wireless communication between the computer 202 and the input devices 106₁ to 106₆ of Figure 1. The computer 202 also has an input connection to the projector 212 (not shown). As known in the art, the computer 202 generates graphical images for display on the display surface 220 of the electronic whiteboard 216 using the projector 212. The display surface 220 of the electronic whiteboard 216 is adapted to detect the presence of a pointing device, such as a pointer 218, at the surface 220, to detect the position of such, and to adapt the displayed image accordingly. The pointer 218 in effect acts as a mouse of the computer system. Although the arrangement of Figure 2 illustrates an interactive display surface 220 which is responsive to a pointing device 218, such as may be provided in an electromagnetic arrangement, other interactive display systems allow for the implementation of an interactive arrangement using alternative technologies, such as touch-sensitive technologies. Embodiments of the invention relating to interactive displays are not limited to any specific interactive surface technology. The pointing device, whether a pen or finger, may be considered a system input device.

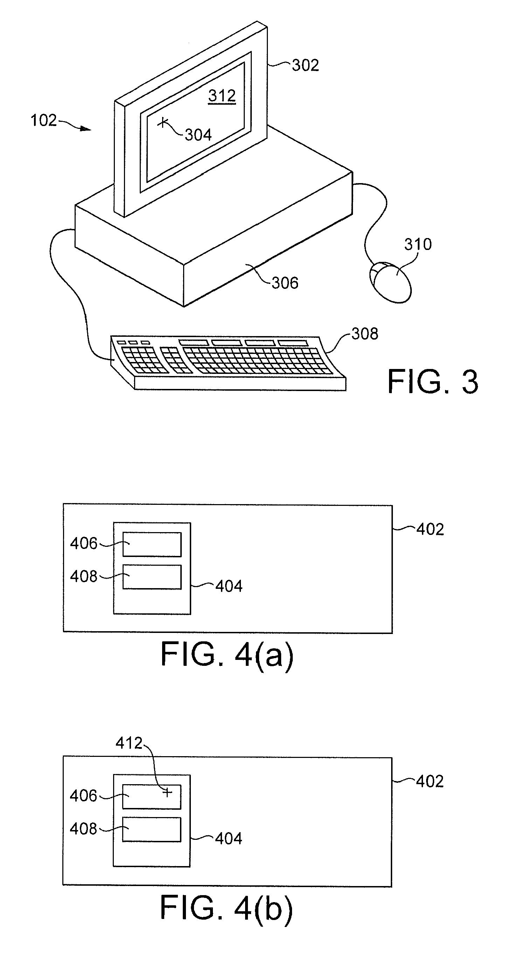

Whilst the invention is described herein particularly in relation to an interactive whiteboard system, the invention is not limited to such an arrangement. The invention, in general, is applicable to any arrangement in which a display is provided to display images, and in which there is provided a plurality of input devices each of which may provide an input to affect the displayed images. As illustrated in Figure 3, the displayed images may be displayed by a display 302 of a conventional computer system 306, the display 302 having a display surface 312. The conventional computer system 306 is provided with a keyboard input device 308 and a mouse input device 310. As known in the art, a cursor 304 is displayed on the display screen 312, under control of the mouse 310. The computer system 306 may also be adapted to communicate, preferably wirelessly, with the input devices 106₁ to 106₆ of Figure 1.

It should be noted that in the arrangement of Figure 2, the keyboard input device 206 and mouse input device 208 of the computer 202 may also control the displayed images on the display surface 220. The mouse may be considered a system input device. Thus a cursor such as cursor 304 of Figure 3 may also be displayed on the display surface 220 of the electronic whiteboard 216 of Figure 2.

In general, the invention is concerned with a display of a computer system, whether an interactive display surface or otherwise, which operates under the control of a computer system using a system input device, which computer system is further adapted to receive inputs from one or more of a plurality of user input devices under the control of the system input device.

The user input devices 106₁ to 106₆ are preferably, in any given implementation, identical. Each user input device 106₁ to 106₆ is preferably uniquely associated with a particular user (a particular student user) during an application session. The devices 106₁ to 106₆ may be graphic tablets, which allow the user to write on an interactive surface thereof in order to provide inputs to a computer system. The user input devices 106₁ to 106₆ may be devices provided with a keypad to allow users to input information to the computer system using keypad inputs. The user input devices 106₁ to 106₆ are preferably provided with a user display, in order to allow a user to view the inputs which they have entered, and also preferably to provide a template to limit the type or quantity of data which a user may input at any time.

In general, the invention relates to the manipulation or modification of a user modifiable item. In the preferred embodiments described hereafter, a user input field is modified as an example. However the user modifiable item is not limited to a user input field which is displayed. The user may be able to provide inputs to control the display, which inputs themselves are not displayed. The term user modifiable item therefore refers to an item which is displayed or is not displayed.

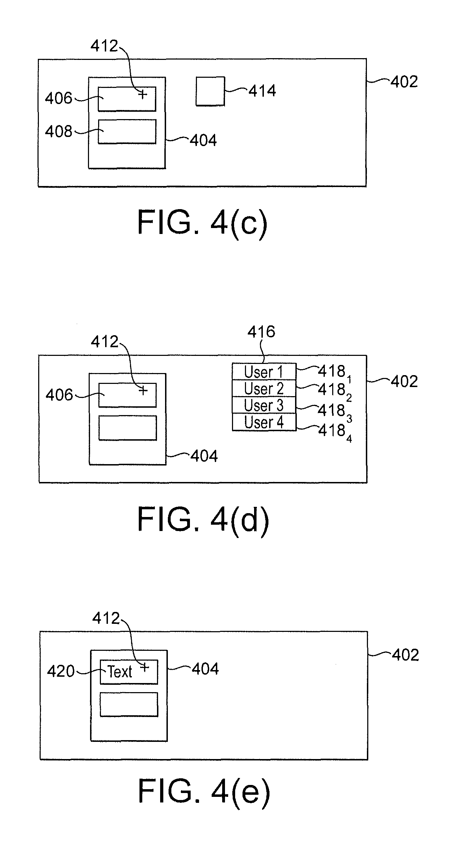

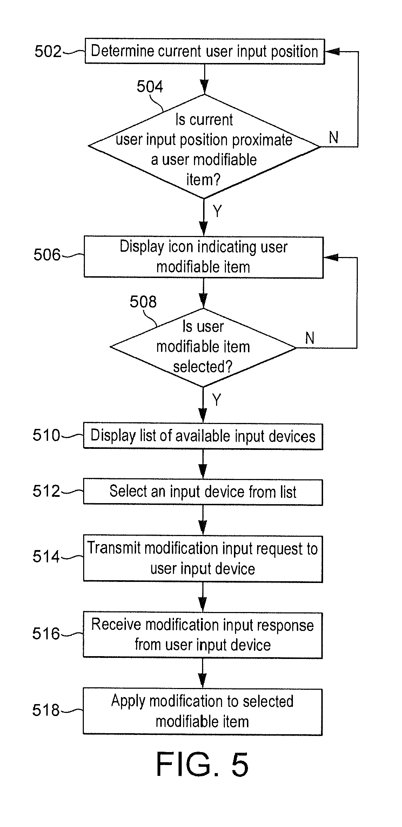

With reference to Figures 4 and 5, a first embodiment of the invention is now described.

Figure 4a illustrates a displayed image 402, displayed on a display screen. The displayed image 402 includes a form 404 including two user input fields, denoted by reference numerals 406 and 408. The user input fields 406 and 408 are fields in which a user may input information, or modify information already displayed in the user input fields.

As illustrated in Figure 4b, a cross denoted by reference numeral 412 represents a current user input position. The cross 412 may represent a displayed cursor on the display screen 402, or may be representative of a current position of a pointing device over an interactive surface. As illustrated in Figure 4b, the current user input position is coincident with the user input field 406.

In preferred embodiments, the user input position is controlled by a system pointing device on the interactive surface. The system pointing device preferably has overall control of an application running on the computer system, and control of selection of user inputs from user input devices. In an educational environment the system pointing device user is preferably a teacher, and the users of the user input devices are preferably students.

In accordance with the first embodiment of the invention, and with reference to Figure 5, in a step 502 the computer system associated with the displayed image 402 determines a current user input position. In a step 504, the computer system then determines whether the current user input position is proximate to a user modifiable item. In the preferred embodiment, a current user input position is proximate to a user modifiable item if the current user input position is coincident with the user modifiable item. In alternative arrangements, the proximate condition may be met provided that the user input position is within a certain distance of the displayed user modifiable item. In the event that it is not determined that a current user input position is proximate to a user modifiable item, then following step 504 of Figure 5 the method returns to step 502 to continue to monitor the current user input position.

If in step 504 it is determined that the current user input position is proximate to a user modifiable item, as is the case in the example of Figure 4b, then the process moves on to step 506. In step 506, the computer system preferably causes an icon to be displayed which indicates that the displayed item which is proximate to the current user input position is a user modifiable item. As illustrated in Figure 4c, this results in an icon 414 being displayed on the display screen 402. Preferably the icon 414 is displayed proximate to the user input field 406. Preferably the displayed icon 414 includes some indication of its purpose, being a prompt to the user of the computer system that the current user input position allows a selection of a displayed item which can be modified by a user.

In a step 508 the computer system then determines whether the user has selected the modifiable item. The user may select the modifiable item by, in an interactive display surface, placing the pointer on or proximate to the user input field 406 to select it, or by similarly selecting the displayed icon 414. In a computer system where a display cursor is controlled by a mouse, the user may select the displayed item by clicking a mouse button with the cursor located proximate or coincident with the user input field 406 or the displayed icon 414.

If the user modifiable item is not selected, then following step 508 the method returns to step 506. If the user modifiable item is selected, then the process proceeds to step 510.

In step 510, in accordance with this embodiment, the computer system causes a list of available user input devices to be displayed on the display screen 402. This is illustrated further with respect to Figure 4d. In the current example, it is assumed that there are four user input devices (i.e. user input devices 106₁ to 106₄ of Figure 1). As illustrated in Figure 4d, responsive to selection of the displayed item 406 a new menu 416 is displayed on the display device, including a list of user input devices available. In the example of Figure 4d, a list identifying four users, labelled as "user 1" to "user 4" and denoted by reference numerals 418₁ to 418₄ is displayed.

The computer has details of the user input devices 106 using techniques known in the art. For example a list of user input devices 106 may be compiled in a registration sequence when the system is initiated, the teaching session begins, or the application begins.

Preferably, during a session (a teaching session covering multiple applications or a single application session) a user input device is uniquely mapped to a user. Therefore the list 416 may be a list of device identifiers or user identifiers (i.e. user names or real names).

The input devices may thus be displayed by way of a device identity, or alternatively there may be displayed the identity of a user to which a device is allocated. In practice, the identity of the user may be more useful. In an educational environment, the operation described above is under the control of a teacher preferably working at the interactive whiteboard and controlling the display using a pointing device as a system input device. A list of users 416 is thus preferably a list of the names of students in the class each of which, or groups of which, are associated with a user input device.

In a step 512, a user input device from the displayed list 416 is selected using the system input device. The user input device is selected by a user having overall control of the system, preferably in the preferred embodiment a user having a pointing device for interacting with the interactive surface on which the images are displayed. The input device may be selected by simply selecting the one of the displayed user input devices in the conventional way in which objects are selected on a displayed image.

In a step 514, a modification input request is then transmitted to the selected input device, following selection of the user input device. Thus the computer system associated with the display 402 causes a request message to be transmitted to a particular user input device. The protocol for transmitting the message from the computer system to the individual input device may be any known communication protocol, in which a user input device is able to receive and process a message in determination of recognition of the unique address associated with the user input device in the received message. Appropriate communication protocols are known in the art of learner response systems.

In a preferred embodiment, the message transmitted to the user input device may include information identifying the type of modification information which is required. This information is dependent upon the specific user modifiable item which is being modified. Thus the message transmitted to the input device may instruct the input device that only a certain type of user input is possible. Thus, for example, where the user modifiable item to be modified is a user input field which simply allows text entry, such as the entry of a URL, the request sent to the user input device may include this information such that the user input device will only allow a user to input text. Alternatively if the user modifiable item is a user input field which allows for a portion of text to be adapted to adjust its colour, font or size etc., then this information may be conveyed to the user input device in order to allow the appropriate information to be entered by the user.

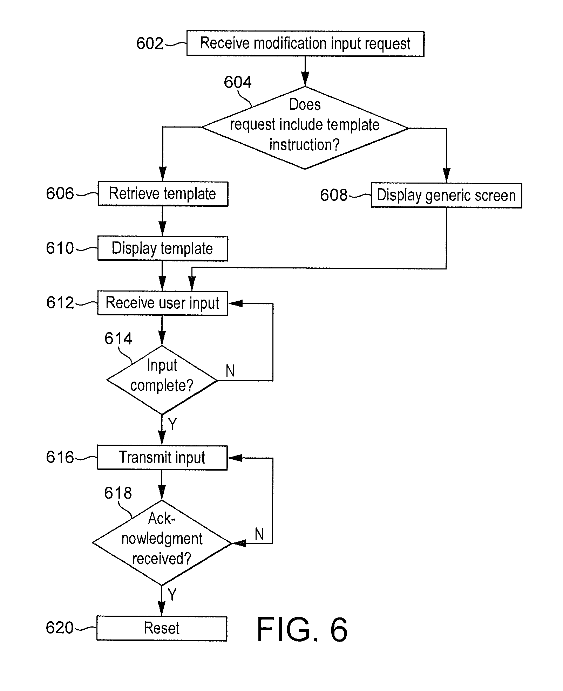

In a preferred embodiment, the type of user modifiable item being modified will fall into one of a plurality of predetermined classes, and the request signal sent from the computer system to the input device will indicate the associated class. In determination of the class, and as further discussed hereinbelow with reference to Figure 6, the user input device will display an appropriate template of that class to the user to allow the user to be prompted to only provide inputs which are associated with the allowed modification for that class.

In a step 516 the computer system receives the modification input response from the selected user input device, and in a step 518 the received modification input is applied to the user modifiable item. As illustrated in Figure 4e, a content 402 of the modifiable item 406 is then updated. In the example shown in Figure 4, the modification is for the user to provide some text for the user input field 406, and as is shown in Figure 4e text 420 ('text') is entered subsequent to the completion of step 518 in accordance with the text provided by the user from the user input device.

With reference to Figure 6, there is illustrated an example flow diagram showing the operation at a user input device selected to provide modification information in accordance with embodiments of the invention.

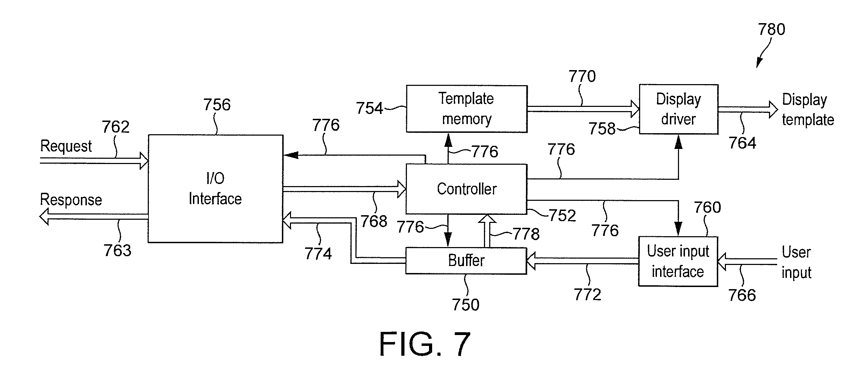

With reference to Figure 7, there is also illustrated the functional blocks required at the user input device in order to implement the flow process of Figure 6. Figure 7 represents an example set of functional blocks, and also does not represent the complete set of functional blocks required to implement a user input device. As shown in Figure 7, the user input device comprises a set of functional blocks 780 including an input/output interface 756 for receiving requests on communication lines 762 from the computer system, a controller 752, a template memory 754, a buffer 750, a display driver 758 for generating display templates on communication line 764, and a user input interface 760 for receiving user inputs on communication lines 766. The controller generates a plurality of control signals denoted by reference numeral 776, which in effect comprise a control bus, which are connected to and control each element of the set of functional blocks 780. The input/output interface 756 provides request information received on communication lines 762 on communication lines 768 to the controller 752. Templates stored in the template memory 754 are provided on communication lines 770 to the display driver 758. The user inputs received at the user input interface 760 on communication lines 766 are delivered on communication lines 772 to the buffer 750 for temporary storage. The user inputs in the buffer 750 are delivered on communication lines 774 to the input/output interface 756 for transmission to the computer on communication lines 763. The content of the buffer 750, or selected contents of the buffer 750, may be provided to the controller on communication lines 778.

With further reference in particular to the flow process of Figure 6, and also with reference to Figure 7, the operation at the user input device in accordance with a preferred embodiment of the invention is now further described.

In a step 602 the user input device receives the modification input request, on communication lines 762, from the computer system associated with the display device.

In a step 604 the user input device determines whether the received modification request includes an instruction to use a template. In a preferred embodiment, there is stored in the user input device a plurality of templates, and the received modification input request includes an instruction to use a particular template. This allows, for example, a template to be displayed on a display of the user input device, such that the user of the input device is prompted to only input information which is suitable for the modification allowed in the user input field. As mentioned hereinabove with reference to Figure 5, preferably each user modifiable item in a given software application is allocated to a particular class of items, and each class is associated with a template. When the modification input request is received by the user input device it includes an identity of that class, which directly maps to a template.

In the event that in step 604 it is determined that the modification input request does include such a template instruction, then in a step 606 the appropriate template is received from the template store, and then in a step 610 the template is displayed on the display of the input device. The controller 768 preferably makes the determination based on the contents of the request signal provided on communication lines 768, and issues an appropriate command signal on a control line 776 to the template memory. The selected template is delivered to the display driver 758, and then displayed on the user input device display (not shown).

If in step 604 it is determined that there is no instruction to use a particular template, then in a step 608 the input device causes a generic display to be displayed on the display of the input device. In a preferred embodiment, the generic display is a default template which allows the user a degree of flexibility in providing an input.

Of course the invention is not limited to a requirement for the user input device to have a display. In an alternative arrangement a user may input modification data at their input device following a verbal command from a user of the pointing device (e.g. a teacher), after the system input device has selected that user input device. Alternatively the identity of the user input device to provide the modification data may be displayed on the display of, for example, the interactive display.

After either of step 608 or 610, in a step 612 the user input device monitors the user input device interface and receives user inputs. The user inputs may be provided by keys of a keypad provided on the user input device, or by inputs detected on an interactive surface of the user input device, such as a touch-sensitive surface or electromagnetic surface, of the user input device.

The user inputs are detected by the user input device interface 760 and stored in the buffer 750. The contents of the buffer 750 may change as the user changes their input selection.

In a step 614 it is determined whether the input by the user is complete. This is preferably indicated by the user selecting a particular keypad or appropriate instruction in order to indicate that the input is complete. If the input is not complete then the method reverts to step 612 to continue to monitor for the user inputs. If the input is complete then the process progresses to step 616.

The controller 752 may identify completion of the user input by monitoring the buffer 750 contents on communication lines 778. The controller may be adapted to recognise a particular input as denoting input completion.

In step 616 the input device transmits the user input to the computer system. The user input is delivered to the input/output interface 756 from the buffer 750 under control of the controller 752.

In an embodiment, the input device awaits an acknowledgement signal from the computer system, as denoted by step 618. If an acknowledgement signal is not received, then the process may revert to step 616 and the user input may be further transmitted. On receipt of an acknowledgement signal in step 618, the process moves to step 620 and the user input in buffer 750 is re-set. Such an acknowledgement sequence is implemented where the communication protocol supports it. In alternative embodiments the user input in buffer 750 is reset on transmission of the user input or by alternative acknowledgement techniques.

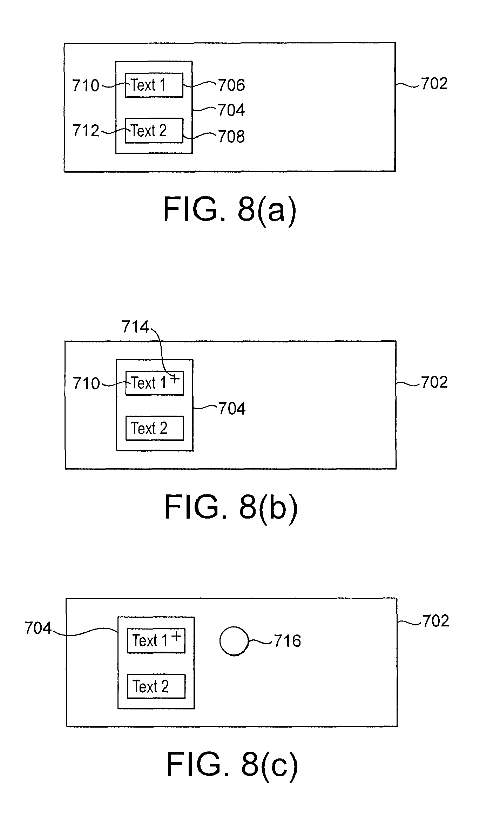

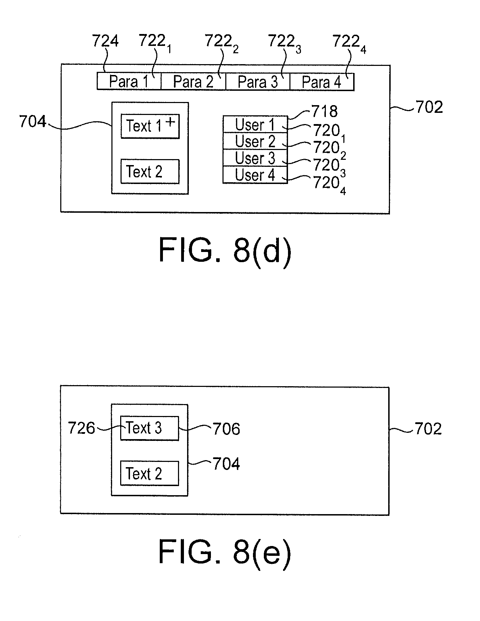

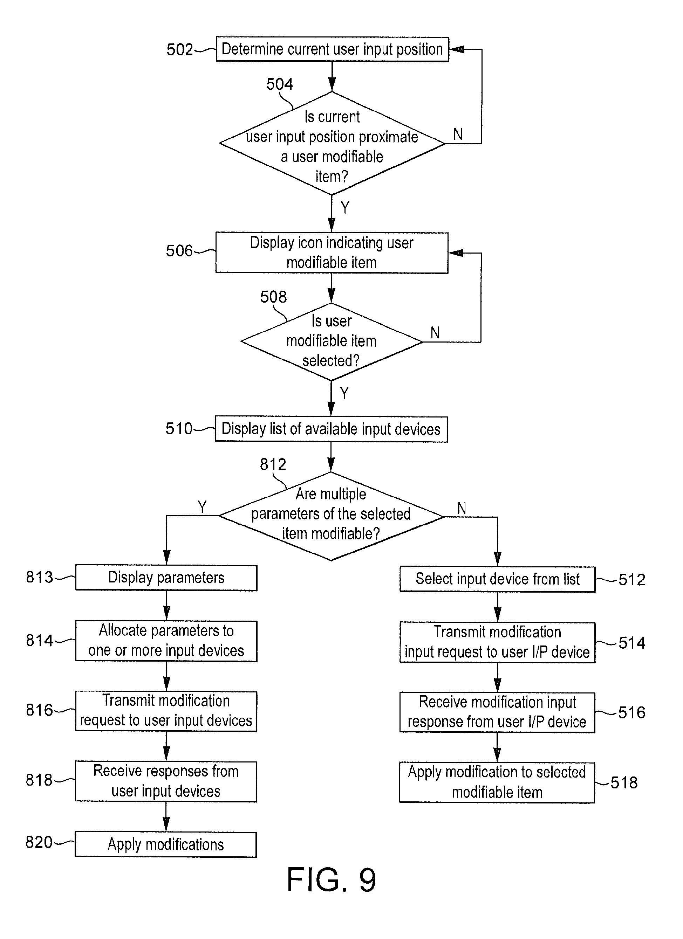

A second embodiment in accordance with the invention is now described with reference to Figures 8 and 9.

Figure 8a illustrates a display 702 of a display device, including a displayed form 704. The displayed form includes two user input fields, 706 and 708. Each of the user input fields 706 and 708 respectively includes a text content 710 and 712. The text content 710 includes the text "text 1" and the text content 712 includes the text "text 2".

In the second described embodiment, the user input field is such that multiple parameters of the field may be modified. Thus, for user input fields such as the text content 710 and 712, the text may be modified by, for example, modifying the text font, modifying the text size, modifying the text colour, modifying the text content etc. Thus there are potentially multiple modifications which may be made in a user input field. In accordance with the second embodiment of the invention, multiple user input devices may be selected to control the modification of one or more parameters of the user input field. Thus, for example, one user input device may be permitted to edit the content of the text, another user input device may be permitted to edit the colour of the text, and a further user input device may be used to modify the font of the text. The operation of this second embodiment is now further described.

Figure 9 illustrates the process flow in the computer system controlling the display device. Steps 502 to 510 of Figure 9 correspond identically to steps 502 to 510 of Figure 5.

Similarly Figures 8a to 8c correspond identically to Figures 4a to 4c. As illustrated in Figure 4b, a cross denoted by reference numeral 714 represents a current user input position. As illustrated in Figure 8b, the current user input position is coincident with the user input field 706. As illustrated in Figure 8c, an icon 716 is displayed on the display screen 702 following determination that the current user input position is proximate to a user modifiable item - namely the text 710 in user input field 706.

Following step 510, a list 718 of users (720₁ to 720₄) is displayed as illustrated in Figure 8d, which corresponds to the display of a list of users 416 in Figure 4d.

In a step 812 it is then determined whether multiple parameters of the selected user modifiable item, or particularly the user field, may be modifiable.

If it is determined in step 812 that multiple parameters may not be modified, then the method moves on to steps 512 to 518 of Figure 5.

If it is determined in step 812 of Figure 9 that multiple parameters may be modified, then the process moves on to step 813. In step 813, the available parameters which may be modified are displayed. This is further illustrated with respect to Figure 8d, in which in a list 724 of the available parameters to be modified are displayed. As illustrated in Figure 8d, for the purposes of example four parameters may be modified, identified as "para 1" to "para 4", and denoted by reference numerals 722₁ to 722₄.

In a step 814, the available parameters to be modified are then allocated to one or more input devices. This may be achieved in a number of ways. For example a given parameter in list 724 may be selected, followed by selection of a user input device in list 718. Alternatively a user input device may be selected in list 718 followed by selection of a parameter in list 724. Alternatively a plurality of parameters in list 724 may be selected followed by selection of a user input device in list 718. In general, one or more parameters may be allocated to one or more user input devices, such that a user input device may be able to modify one parameter or more than one parameter, and other user input devices may similarly be allocated to modify one or more parameters. Some user input devices may not be allocated any parameters to modify. All parameters may be allocated to one user input device.

In a step 816 the computer system associated with the display device then transmits the appropriate modification request to the selected user input devices. Where multiple user input devices are selected, multiple modification requests will be transmitted, each modification request preferably being unique to a particular user input device.

In a step 818 the computer system receives the modification responses from the input devices, and then in step 820 the modifications are applied to the displayed user field. As illustrated in Figure 8e, the content 726 of the user field 706 is amended to include new content, "TEXT 3". Thus the content of the field has been modified, and also the format of the field has been modified by placing the entered text in capital letters.

In a further modification to the second embodiment, multiple user devices may also be selected where there is only One parameter of a modifiable item to be modified, or multiple user devices may be allocated to the same parameter. The modification of a single parameter may then be based, in effect, on a vote amongst a plurality of users for the modification to be made. For example, if multiple user devices are requested to choose the colour of the item, the colour applied may be the one that the most of the multiple user devices select.

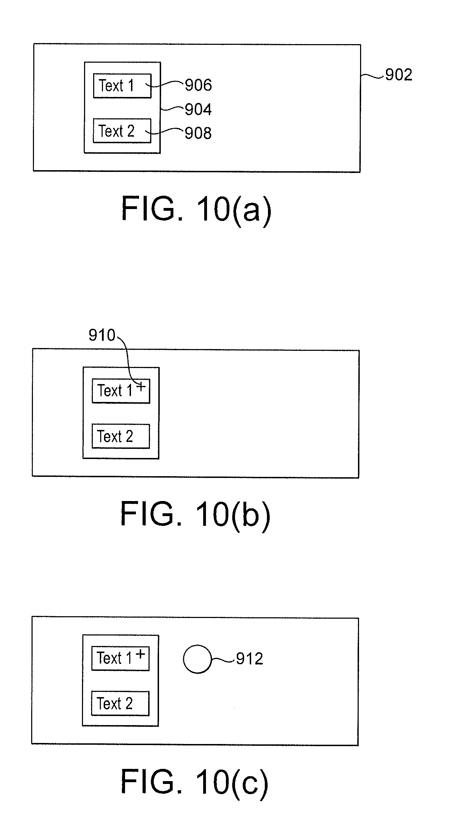

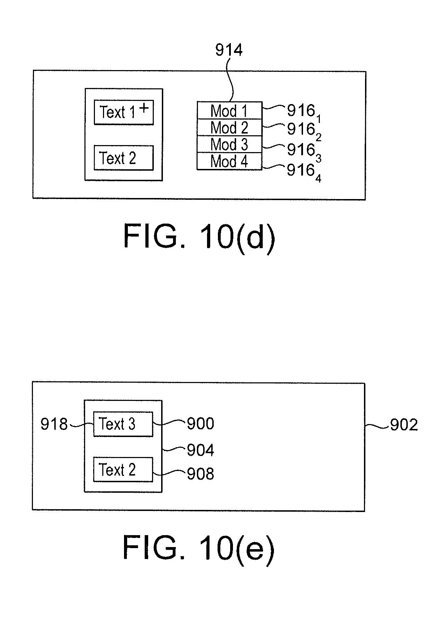

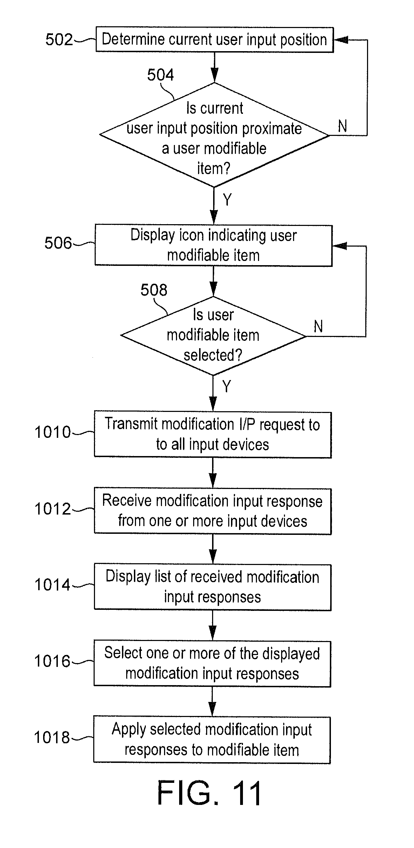

A third embodiment of the invention is now described with reference to Figures 10 and 11.

With reference to Figure 10a, there is illustrated a display 902 of a display device including a form 904. The form includes two user input fields 906 and 908. In the example illustrated the user input field 906 comprises text "text 1" and the user input field 908 includes text "text 2".

In the third embodiment, the process steps 502 to 508 of Figure 11 are identical to the process steps 502 to 508 of Figure 5.

The modifications to the display in Figures 10b and 10c, starting from Figure 10a, are also identical to the modifications of Figures 4b and 4c. As illustrated in Figure 10b, a cross denoted by reference numeral 910 represents a current user input position. As illustrated in Figure 10c, following detection of the current user input position being proximate to a user modifiable item, an icon 912 is displayed on the display screen 902.

In accordance with the third embodiment, following determination that a modifiable item has been selected in step 508, in step 1010 a modification input request is transmitted to all user input devices, i.e. the request is broadcast. As described in other embodiments hereinabove, the modification request may include an instruction associated with the type of modification data which may be provided.

In a step 1012 the computer system associated with the display receives modification input responses from one or more user input devices.

In a step 1014, the computer system associated with the display 902 causes a list of the received modification input responses to be displayed on the display 902. Thus as illustrated in Figure 9d, a list 914 of responses is displayed. In the example illustrated, the list comprises four responses, comprising data "mod 1" to "mod 4" denoted by reference numerals 916₁ to 916₄.

Thus rather than displaying the list of user input devices (or users) available, there is displayed a list of modification data provided by the user input devices. The system input device can then be used to select from the modification data provided, rather than selecting individual user input devices. In an alternative arrangement, displayed in combination with the modification data may be the identity of the user input device from which the modification data was received, such as the identity of the user of the user input device.

In a step 1016, the user working at the interactive surface may then select one or more of the displayed modification input responses with the system input device.

This embodiment may modify a user modifiable item using one or more parameters, if more than one parameter of an item may be modified. In such case the request sent to the user devices preferably identifies all the parameters that may be modified. In the event that the user input field has more than one parameters which may be modified, then the user working at the interactive surface may select multiple values associated with the multiple parameters.

In a step 1018 the selected modification input responses are then applied to the modifiable item. Thus as illustrated in Figure 10e, the user input field 906 has its content 918 modified from "text 1" to "TEXT 3". Thus the content of the user input field has been modified together with the font of the user input field.

As mentioned with respect to the second embodiment, in the third embodiment where multiple user input devices return multiple modification data for the same parameter, there may alternatively be displayed the most popular modification data replied, rather than all modification data.

One skilled in the art will appreciate that various aspects of different embodiments described herein may be combined. Aspects of embodiments may also be modified. For example a list of user input devices may be permanently displayed, rather than displayed on request, or automatically displayed in place of the icons 414, 716 and 912.

In general the invention preferably provides for the selection of modification data from a plurality of items, each item being associated with modification data.

Each item may be modification data itself. Thus there may be provided for the selection from a plurality of modification data. Each modification data may be a value or setting associated with one or more modifiable parameters of the modifiable item. Preferably such selection is provided for by selection from a list displayed to the user input device.

Each item may be a user input device, or a user input identifier, or a user identifier, which is adapted to provide modification data. Thus there may be provided for the selection from a plurality of user input devices. Such selection may be provided for by selection from a plurality of identifiers identifying user input devices. Preferably such selection is provided for by selection from a list displayed to the user of the system input device.

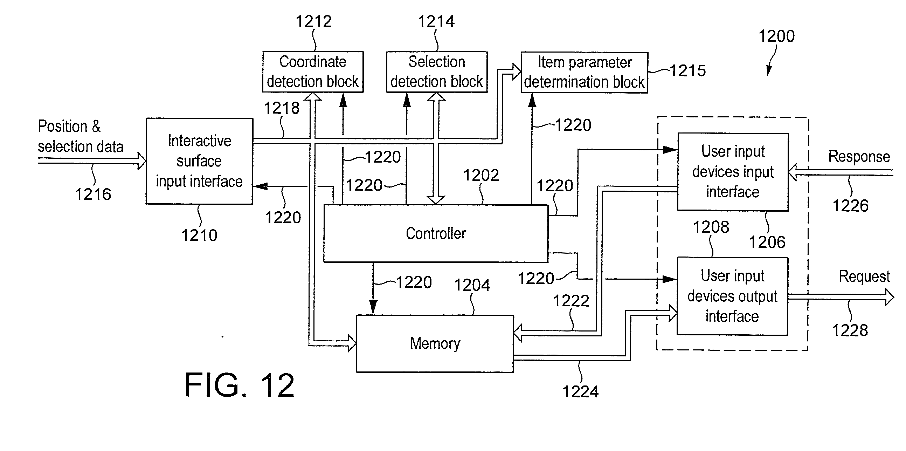

With reference to Figure 12, there is illustrated the main functional elements of a computer system for implementing preferred embodiments of the invention denoted by reference numeral 1200. This relates to the functional elements associated with, in the preferred embodiments, the interactive display system, such as the functional elements required in the computer system 202 of Figure 2.

The functional elements 1200 include a controller 1202, a memory 1204, a user input devices input interface 1206, a user input devices output interface 1208, an interactive surface input interface 1210, a coordinate detection block 1212, a selection detection block 1214, and an item parameter determination block 1215. The interactive surface input interface 1210 receives position and selection data from the interactive display surface on communication lines 1216 provided by the system input device. The received data is then provided on an internal data bus 1218 to the coordinate detection block 1212, the selection detection block 1214, the item parameters determination block 1215, the controller 1202, and the memory 1204. The controller 1202 generates control signals on lines 1220, which may generally be considered to be a control bus, to each of the other functional elements of the group of functional elements 1200. As known in the art, the coordinate detection block 1212 operates on the data received at the interactive surface and presented on bus 1218 to determine the location of a user input, which location may be stored in memory 1204. As also known in the art the selection detection block 1214 operates on the location data associated with the user inputs, and location data of objects displayed on the interactive display, to determine proximity between a user input and the displayed object. The item parameter determination block 1215 operates under the control of the controller 1202 to determine the parameters of a selected user modifiable item which may be modified. The user input devices output interface block 1208 operates under the control of the controller 1202 to generate requests on communication lines 1228 which are transmitted to the user input devices. The information included in such requests is provided to the user input devices output interface 1208 on communication lines 1224 from the memory 1204. The user input devices input interface 1206 receives responses on communication lines 1226 from the user input devices, which responses are stored in memory 1204 via communication lines 1222 under the control of the controller 1202.

The function elements shown in Figure 12 do not represent complete function elements for implementation of a computer system in an interactive display system. The functional elements illustrated represent the main function elements to achieve implementation of embodiments of the invention in a computer system.

The methods described hereinabove may be implemented on computer software running on a computer system. The invention may therefore be embodied as a computer program code being executed under the control of a processor or a computer system. The computer program code may be stored on a computer program product. A computer program product may be included in a computer memory, a portable disk, or portable storage memory, or hard disk memory.

The invention and its embodiments are described herein in the context of application to an interactive display of an interactive display system. It will be understood by one skilled in the art that the principles of the invention, and its embodiments, are not limited to an interactive display surface. The principles of the invention and its embodiments may be implemented in any computer system including a display, a system input device, and a plurality of user input devices. The invention encompasses any technique for the movement of a user input position, whether by way of a pointer on an interactive display surface (such as a finger or pen), or by way of a conventional computer mouse.

The invention has been described herein by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. A method for controlling a user input in a computer system including a display, the computer system being adapted to receive inputs from a plurality of user input devices under the control of a system input device, the method comprising:
a. detecting selection, by the system input device, of a modifiable displayed item;
b. receiving modification data from at least one of the plurality of user input devices; and
c. modifying the modifiable displayed item with the received modification data.

2. The method of claim 1 further comprising the steps of: selecting the modification data from a plurality of items, each item being associated with modification data; displaying a list of said items, the list being displayed to a user of the system input device; wherein the plurality of items comprise a plurality of identifiers associated with the plurality of user input devices; determining if the selected item is to be modified by an input device; and in dependence on said modification determination, determining at least one amongst the plurality of input devices to provide the modification.

3. The method of claim 1 or claim 2 further comprising the steps of: selecting the modification data from a plurality of items, each item being associated with modification data; and displaying a list of said items, the list being displayed to a user of the system input device, wherein the plurality of items comprise a plurality of modification data.

4. The method of claim 3 wherein the step of receiving modification data comprises: transmitting a request for modification data to one or more user input devices; receiving modification data from one or more user input devices; and displaying the received modification data, wherein the step of modifying the modifiable displayed item comprises selecting one or more displayed modification data, and applying the selected modification data.

5. The method of any preceding claim further comprising the initial step of determining if a displayed item is proximate a current user input position, and further determining if modification of the displayed item is possible, and in dependence thereon displaying an icon proximate the displayed item in dependence on said modification determination.

6. The method of any one of claims 2 to 5 further comprising the step, in dependence on said modification determination, of determining if modification of the selected item is to be controlled by a plurality of input devices, and in dependence on said control determination, determining the ones amongst the plurality of input devices to provide the control.

7. The method of claim 6 wherein each of the plurality of input devices is selected to control a different characteristic of the selected displayed item.

8. The method of any one of claims 2 to 7 further comprising the step, after a step of determining an input device to provide the control, of enabling the one of the plurality of input devices to provide the control, the step of enabling including sending a request for information to the one input device, and the step of enabling including sending an instruction to load a user template to the input device, wherein the instruction identifies a template be displayed to the display of the input device, wherein the template is determined by a characteristic of the selected displayed item.

9. The method of any one of claims 3 to 8 further comprising the step, in dependence on said modification determination, of determining if more than one modification data is to be applied to the selected item, and in dependence on said control determination, determining the ones amongst the plurality of modification data to be applied.

10. A computer program for performing, when run on a computer, the method according to any one of claims 1 to 9.

11. A computer program product for storing computer program code which, when run on a computer, performs the method according to any one of claims 1 to 9.

12. A computer for controlling a display, the computer being adapted to receive inputs from a plurality of user input devices under the control of a system input device, the computer being further adapted to:
a. detect selection, by the system input device, of a modifiable displayed item;
b. receive modification data from at least one of the plurality of user input devices; and
c. modify the modifiable displayed item with the received modification data.

13. The computer of claim 1 further adapted to select one of a plurality of items responsive to a selection by the system input device, the plurality of items each being associated with modification data, wherein the plurality of items comprise a plurality of identifiers associated with the plurality of user input devices, or a plurality of modification data.

14. The computer of claim 12 or claim 13 further adapted to transmit a request for modification data to one or more user input devices; receive modification data from one or more user input devices; display the received modification data, select one or more displayed modification data, and apply the selected modification data.

15. The computer of any one of claims 12 to 14 further adapted to determine if a displayed item is proximate a current user input position; determine if modification of the displayed item is possible, and in dependence thereon display an icon proximate the displayed item in dependence on said modification determination.
